# EUROPEAN PATENT APPLICATION

(11) **EP 1 762 653 A1**
(43) Date of publication of application: **14.03.2007**
(21) Application number: 06119340.5
(22) Date of filing: 22.08.2006
(51) Int. Cl.: D06H 7/22, B23K 26/40

(54) **Machine for cutting or engraving textile materials by means of laser, particularly ribbons of trimmings**

(30) Priority: 07.09.2005 IT MI20051654
(71) Applicant: Framax S.r.l., I-21010 Besnate (VA) (IT)
(72) Inventor: Merlin, Massimo, I-21040 Sumirago (VA) (IT)
(74) Representative: Zanoli, Enrico

(57) **Abstract**

Described herein is an improved machine for cutting or engraving textile materials, particularly ribbons of trimmings, comprising a supporting frame (10) with means for guiding the ribbon of trimmings (11) along a path surmounted in a stretch by a laser device (25) for cutting or engraving the ribbon (11). The machine is provided with a reel (18) for winding the processed ribbon actuated at the same speed of rotation as a motor roller (16) via an appropriate system of belts and pulleys.

## Description

The present invention relates to an improved machine for cutting or engraving textile materials, particularly ribbons of trimmings.

Use is known of cutting machines using laser for cutting or engraving fabrics, natural or artificial leathers, and other textile materials according to geometrical models defined by programs managed and controlled with a computer connected to the cutting machine.

From the international patent application No. WO 99/37851, a method is known for laser cutting of fabrics made of non-meltable natural or artificial materials, which is based upon coupling of said fabrics with synthetic components that can undergo melting at the temperature of the laser beam.

From the patent No. EP 0 606 347 B1, a laser apparatus is known for cutting fabrics provided with embroidery or similar ornamental patterns. More in particular, said equipment is designed for making cuts in the fabric by means of laser along the edges of the embroidery itself so as to follow its pattern without causing cuts in the embroidery and without leaving undesirable parts of the fabric included in the embroidery or ornamental pattern.

There, however, exists the problem of cutting or engraving fabrics of very small width, such as the ribbons of trimmings, in an efficient and convenient way using laser. Known machines for laser cutting, in fact, are conceived for receiving fabrics of a width generally of above a metre, whereas articles of trimmings are substantially ribbons that are very long but have a maximum width as a rule not greater than 10-15 cm, often just a few centimetres. The dimensional disproportion between the width and the length means that said ribbons cannot be handled satisfactorily in the laser-cutting machines currently available on the market. In particular, the tension-bar system or counterweight and the motor-drive systems present in said conventional machines - which are useful for handling and maintaining the traditional piece of fabric in the desired position - cause excessive stresses in the ribbons of trimmings and do not enable a regular unwinding/winding of the ribbon at the desired rate, so causing risks of incorrect or imprecise execution of the cut by the laser device.

An object of the present invention is consequently to provide an improved machine for cutting or engraving textile materials, particularly ribbons of trimmings, that is such as to eliminate or reduce the disadvantages of known machines, and moreover has a simple and inexpensive structure and presents reliable operation.

The aforesaid and other objects and advantages of the invention, as will emerge from the sequel of the description, are achieved with an improved machine for cutting or engraving textile materials, particularly ribbons of trimmings, comprising:
- a supporting frame with means for guiding a ribbon of trimmings along a path surmounted in a stretch by a laser device for cutting or engraving the ribbon, said laser device being translatable in the direction of the width of the ribbon and being controlled by a control system for execution of a cutting/engraving according to a programmed pattern; and
- a motor roller set downstream of said laser device in the direction of translation of said ribbon;
said machine being characterized in that it further comprises:
- an unwinding reel carrying the ribbon to be processed, set upstream of said laser device with respect to the direction of translation of said ribbon;
- a winding reel carrying the processed ribbon, set downstream of said laser device with respect to the direction of translation of said ribbon, said winding reel being actuated by said motor roller at a rate substantially coinciding with the speed of rotation of said motor roller; and
- a pressure roller for pressing the processed ribbon against said motor roller, said pressure roller being fixed to said supporting frame and being subjected to the action of elastic means.

Some preferential embodiments of the invention are now described, purely by way of nonlimiting example, with reference to the attached plate of drawings, in which:
- Figure 1 is a schematic perspective view of a first embodiment of the machine according to the invention;
- Figure 2 is a schematic perspective view of an enlarged detail of the device of Figure 1;
- Figure 3 is a partial top plan view of the machine of Figure 1;
- Figure 4 is a schematic cross-sectional view according to the line IV-IV of Figure 3;
- Figure 5 is a schematic partial rear perspective view of the machine of Figure 1; and
- Figure 6 is a schematic side elevation of a second embodiment of the machine according to the invention.

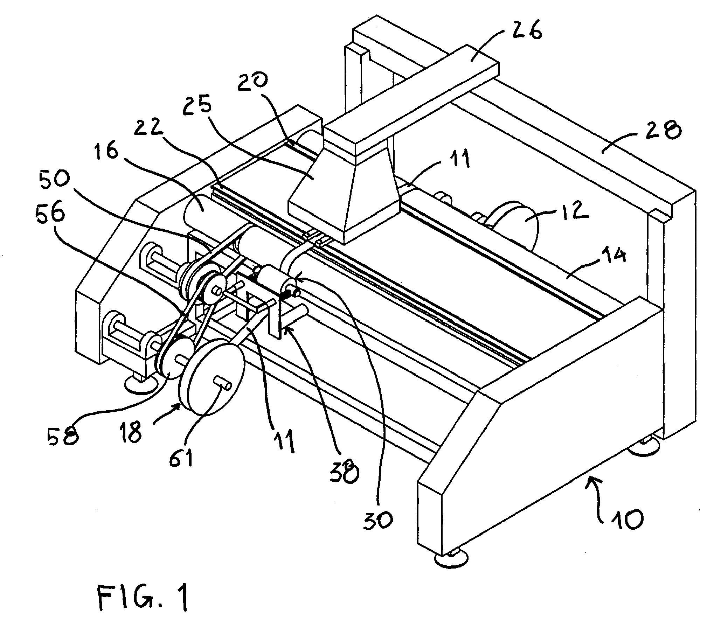

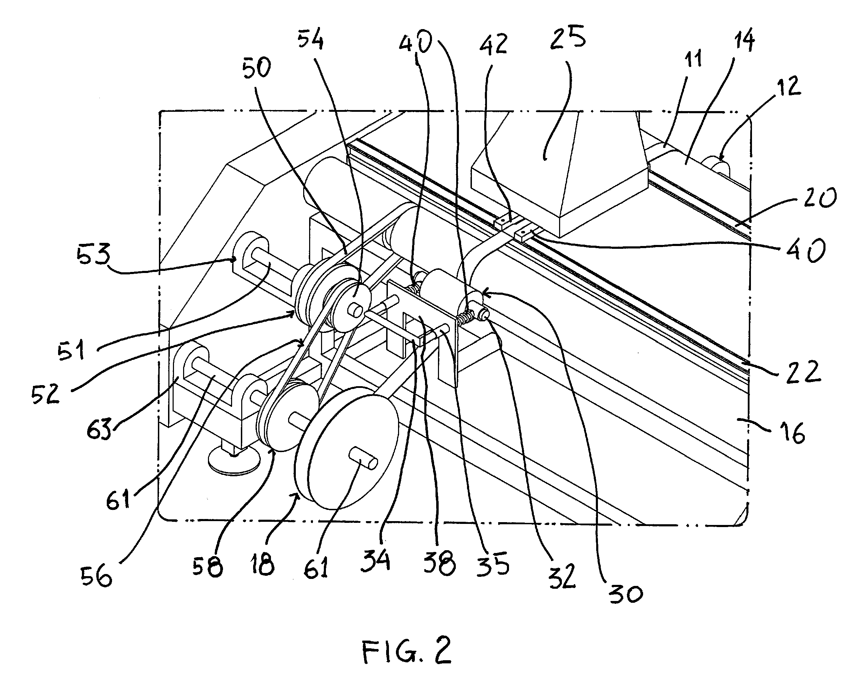

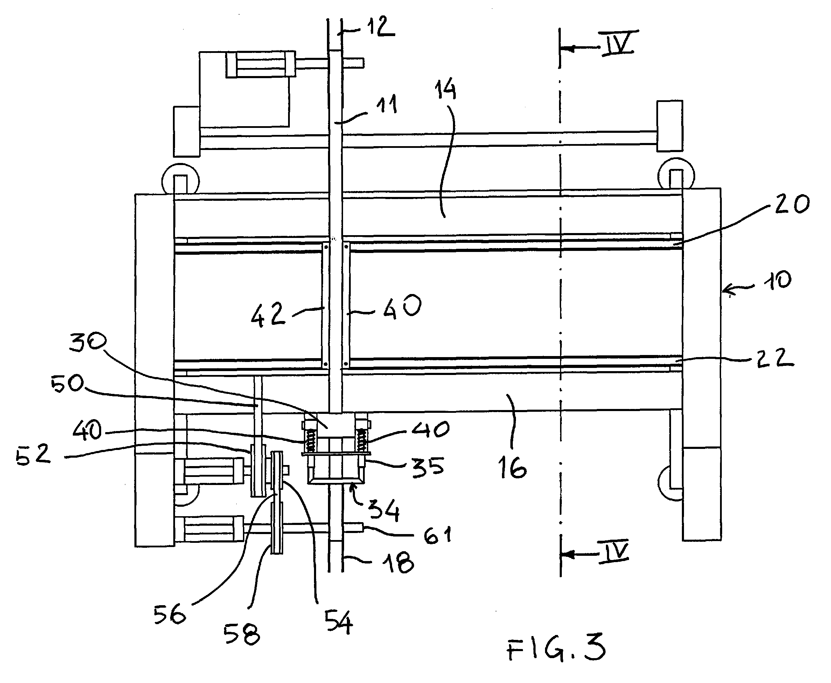

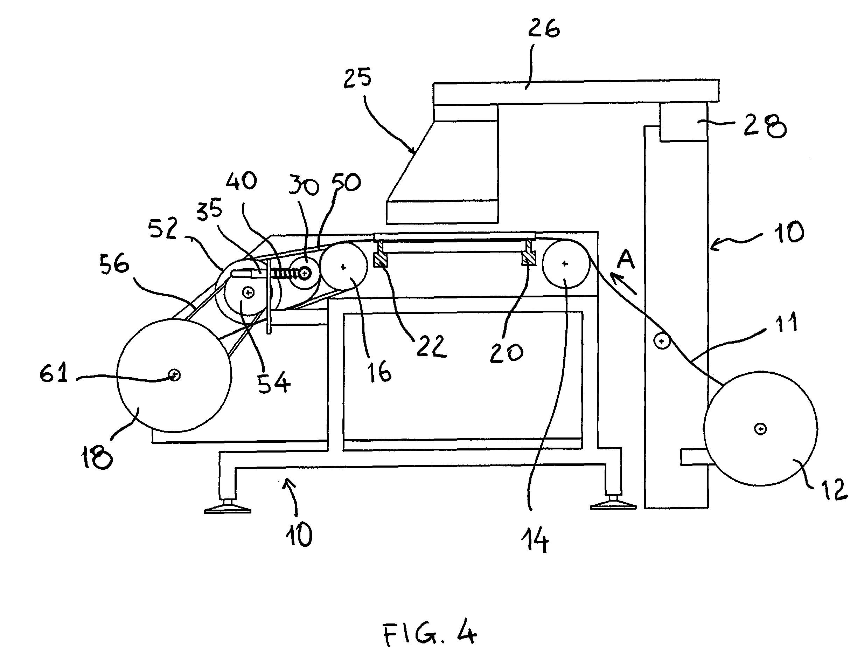

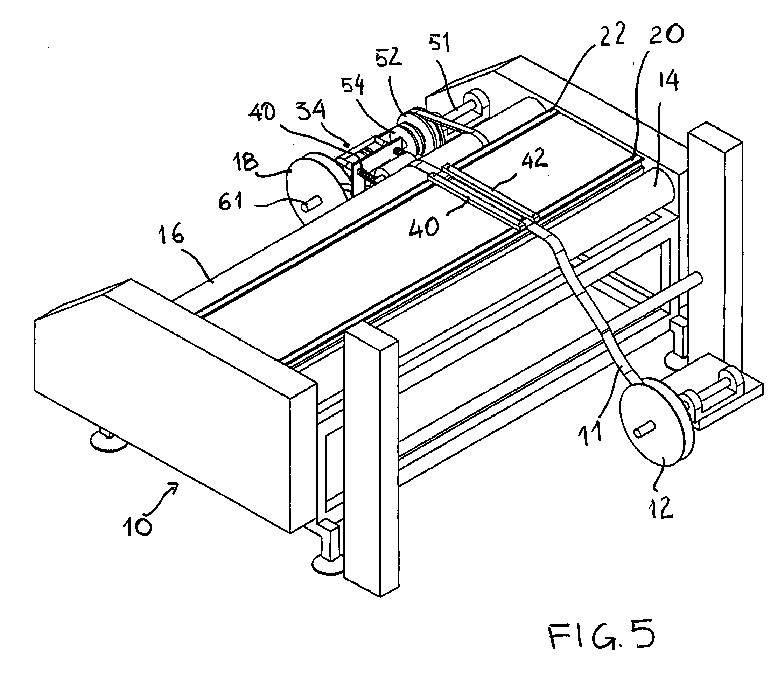

With reference to Figures 1 to 5, number 10 designates as a whole the supporting frame of the improved machine for cutting or engraving textile materials, particularly ribbons of trimmings, according to the invention. A ribbon of trimmings 11 to be processed for cutting or engraving is wound on an unwinding reel 12 mounted on the rear part of the supporting frame 10. The ribbon 11 is translated in the direction of the front part of the frame 10, as indicated by the arrow A (Figure 4), along a path that brings it into contact with the rollers 14 and 16 until it is wound on the front winding reel 18. The translation of the ribbon 11 is determined by the roller 16, which is the motor roller, in turn actuated by motor means (not illustrated). The frame 10 also comprises two bars 20, 22 set between the rollers 14 and 16 and parallel thereto. Processing of the ribbon 11 takes place in the space defined between said bars using a laser-cutting device 25 that surmounts the stretch of ribbon 11 defined between the two bars 20, 22. The laser device 25 is carried by an arm 26 slidably mounted on a longitudinal member 28 fixed to the frame 10. Translation of the laser device 25 occurs in the direction perpendicular to the direction of translation of the ribbon 11, i.e., in the direction of the width of the ribbon 11. Translation of the laser device is obtained by motor means (not illustrated) and is driven by a computerized control system that can be programmed for making cuts and/or engravings in the ribbon according to pre-selected models.

The ribbon 11 is translated by a force of friction determined by the rotation of the motor roller 16 coupled to the action of pressure of the pressure roller 30, between which the ribbon passes. In this way, the ribbon 11 is pulled towards the front part of the machine and unwound off the unwinding reel 12. The pressure roller 30 is mounted idle on a shaft 32, which is fixed to the end of the arms of a fork 34, which slide within bushings 35 of a bracket 38, fixed to the frame 10. A pair of springs 40, which react against the bracket 38, are housed on the arms of the fork 34 and the shaft 32 of the pressure roller 30 so as to press the roller 30 against the ribbon 11 and the motor roller 16. The effect of the system described is that of calendering and translating the ribbon 11 and keeping it flat and distended so that it adheres to the motor roller 16.

In the plane stretch between the two bars 20, 22 the ribbon 11 is guided and kept in the correct position also by two rods 40, 42 mounted on the bars 20, 22. The distance between the rods 40, 42 is adjustable according to the width of the ribbon 11.

After the cutting or engraving operation carried out by the laser device 25, the ribbon 11 is wound onto the winding reel 18, which is set in rotation at the same rate as the motor roller 16. This is obtained by means of a system of belts and pulleys constituted by a first belt 50, which grips on the motor roller 16, which in turn transmits the rotation to a first pulley 52 fixed to a shaft 51, mounted so that it can rotate on a bracket 53 fixed to the frame 10. Fixed to the shaft 51 is also a second pulley 54, which has a diameter smaller than that of the first pulley 52 and is connected via a second belt 56 to a third pulley 58 fixed to a shaft 61, which is mounted so that it can rotate on a bracket 63 fixed to the frame 10. Likewise fixed to the shaft 61 is the winding reel 18. The system of belts and pulleys is made with dimensions and ratios between the diameters such that the speed of rotation of the winding reel 18 is substantially the same as that of the motor roller 16. In this way, a very regular winding of the ribbon 11 already processed on the reel 18 is obtained, preventing any slackening or excessive tension of the ribbon, which could jeopardize its integrity or the quality of laser process that is carried out simultaneously upstream.

The combined movement of translation of the ribbon of trimmings 11 in the direction of the arrow A and of translation of the laser device 25 in the direction of the width of the ribbon 11, i.e., perpendicular to the direction of translation of the ribbon, enables a cutting or engraving to be obtained according to a desired model, programmed via the control system of the machine.

The characteristics of the laser device and the power applied to obtain a simple engraving of the ribbon or else its cutting, are chosen in a way known by persons skilled in the branch.

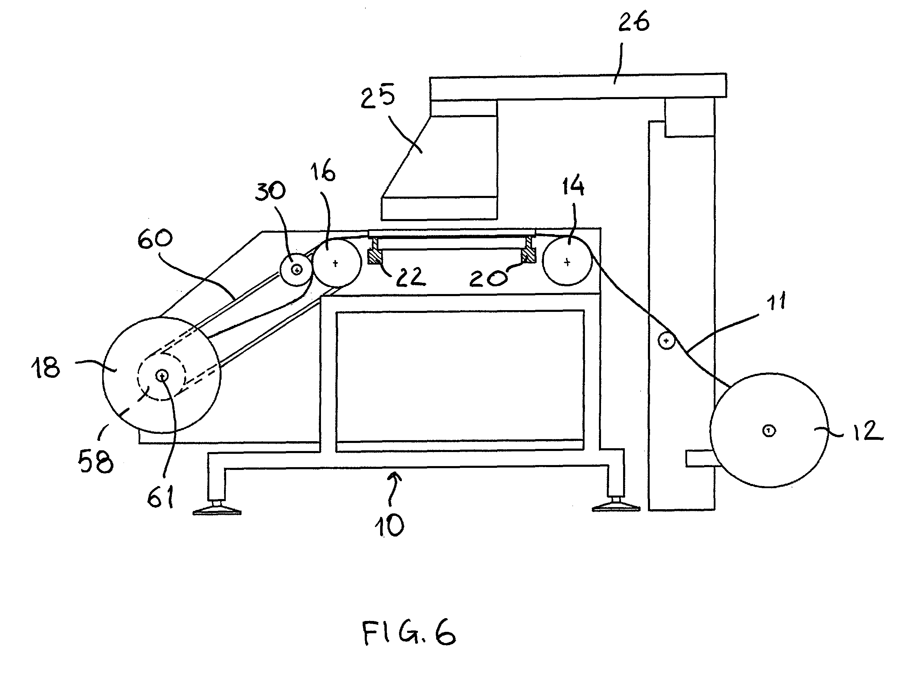

Figure 6 illustrates a second embodiment of the invention, in which the movement of rotation of the motor roller 16 is transmitted via a belt 60 directly to the pulley 58, fixed to which, via the shaft 61, is the winding reel 18. The other components of the machine are as described with reference to Figures 1-5. The choice of transmitting the motion to the winding reel 18 with a direct transmission between the motor roller 16 and the reel 18 or else with an indirect transmission via the system of belts and pulleys, described previously, depends principally upon the nature and dimensions of the encumbrance of the parts set between the roller 16 and the reel 18. The embodiment of Figure 6 is simpler but requires that no encumbrance should be present that has to be overcome for transmitting the motion from the motor roller to the winding reel 18, whereas the embodiment of the previous figures enables the encumbrance to be overcome by means of an elbow in the kinematic chain.

From the foregoing description, it is evident that it is possible to provide a machine in which there is a plurality of unwinding and winding reels and a plurality of ribbons of trimmings aligned and actuated by one and the same shaft and system of movement. Said plurality of ribbons of trimmings can be processed simultaneously by one and the same laser device in reciprocating motion above them.

Only some preferential embodiments of the invention have been described, but numerous modifications and variations may be made to the invention, all of which fall within the scope of the same inventive idea, defined in the annexed claims.

## Claims

1. An improved machine for cutting or engraving textile materials, particularly ribbons of trimmings, comprising:
- a supporting frame (10) with means for guiding a ribbon of trimmings (11) along a path surmounted in a stretch by a laser device (25) for cutting or engraving the ribbon (11), said laser device (25) being translatable in the direction of the width of the ribbon and being controlled by a control system for the execution of a cutting/engraving according to a programmed pattern; and
- a motor roller (16) set downstream of said laser device (25) in the direction of translation of said ribbon;
said machine being **characterized in that** it further comprises:
- an unwinding reel (12) carrying the ribbon to be processed (11), set upstream of said laser device (25) with respect to the direction of translation (A) of said ribbon (11);
- a winding reel (18) carrying the processed ribbon, set downstream of said laser device (25) with respect to the direction of translation of said ribbon, said winding reel (18) being actuated by said motor roller (16) at a speed substantially coinciding with the speed of rotation of said motor roller; and
- a pressure roller (30) for pressing the processed ribbon against said motor roller (16), said pressure roller (30) being fixed to said supporting frame and being subjected to the action of elastic means (40).

2. The machine according to Claim 1, **characterized in that** said winding reel (18) is actuated by said motor roller (16) by means of a kinematic chain comprising:
- a first belt (50) gripped by said motor roller (16) and by a first pulley (52) fixed to a first shaft (51) mounted so that it can rotate on a bracket (53) fixed to said frame (10); and
- a second pulley (54) likewise fixed to said first shaft (51), connected via a second belt (56) to a third pulley (58) fixed to a second shaft (61) mounted so that it can rotate on a bracket (63) fixed to said frame (10), said winding reel (18) for winding the ribbon (11) being fixed to said second shaft (61);
the dimensional ratios between said pulleys being such that the speed of rotation of said winding reel (18) is substantially the same as that of said motor roller (16).

3. The machine according to Claim 1, **characterized in that** said winding reel (18) is actuated by said motor roller (16) by means of a kinematic chain comprising a belt (60) gripped by said motor roller (16) directly connected to a pulley (58) to which said winding reel (18) for winding said ribbon is fixed, via a rotating shaft (61), so that the speed of rotation of said winding reel (18) is substantially the same as that of said motor roller (16).

4. The machine according to Claim 1, Claim 2 or Claim 3, **characterized in that** said pressure roller (30) is mounted idle on a shaft (32) fixed to the end of the arms of a fork (34), said arms being able to slide within bushings (35) of a bracket (38) fixed to said frame (10).

5. The machine according to Claim 4, **characterized in that** said pressure roller (30) is subjected to the action of a pair of springs (40) housed on the arms of said fork (34) which react against said bracket (38), so that said pressure roller (30) is pressed against the ribbon (11) and the motor roller (16).

6. The machine according to any one of the preceding claims, **characterized in that** it comprises a pair of rods (40, 42) for guiding the ribbon (11) in the stretch surmounted by said laser device (25), said rods being adjustable in the direction of the width of said ribbon.

7. The machine according to Claim 1, **characterized in that** it comprises a plurality of said unwinding reels (12) and winding reels (18) for unwinding and winding said ribbon (11) and corresponding pressure rollers (30) and means for rotation of said winding rollers, such that said laser device (25) operates simultaneously on a plurality of said ribbons.
